# EUROPÄISCHE PATENTSCHRIFT

(11) **EP 2 718 346 B1**
(45) Veröffentlichungstag und Bekanntmachung des Hinweises auf die Patenterteilung: **29.08.2018**
(21) Anmeldenummer: 12727630.1
(22) Anmeldetag: 05.06.2012
(51) Int. Cl.: C08G 18/48, C08G 18/71, C09J 175/04, C09J 175/06, C09J 175/08

(54) **POLYURETHAN-POLYMERE**
POLYURETHANE POLYMERS
POLYMÈRES DE POLYURÉTHANE

(30) Priorität: 08.06.2011 DE 102011077201
(43) Veröffentlichungstag der Anmeldung: 16.04.2014
(73) Patentinhaber: Covestro Deutschland AG, 51373 Leverkusen (DE)
(72) Erfinder: PEIFFER, Evelyn, 51375 Leverkusen (DE); MATNER, Mathias, 41464 Neuss (DE)
(74) Vertreter: Levpat
(86) Internationale Anmeldenummer: PCT/EP2012/060590
(87) Internationale Veröffentlichungsnummer: WO 2012/168234

(56) Entgegenhaltungen:
- EP-A1- 1 995 261
- EP-A2- 0 372 561
- DE-A1-102008 038 488

## Beschreibung

Die vorliegende Erfindung betrifft nicht-wässrige Polyurethan-Polymere, ein Verfahren zu ihrer Herstellung und ihre Anwendung als Bindemittel für Klebstoffe, Beschichtungen oder Schäume.

Alkoxysilanfunktionelle Polyurethane, die über eine Silanpolykondensation vernetzen, sind seit langem bekannt. Ein Übersichtsartikel zu dieser Thematik findet sich z.B. in "Adhesives Age" 4/1995, Seite 30 ff. (Autoren: Ta-Min Feng, B. A. Waldmann). Derartige alkoxysilanterminierte, feuchtigkeitshärtende Einkomponenten-Polyurethane werden in zunehmendem Maße als weichelastische Beschichtungs-, Dichtungs- und Klebmassen im Bauwesen und in der Automobilindustrie verwendet.

Solche alkoxysilanfunktionellen Polyurethane können gemäß US-A 3,627,722 oder DE-A1 745 526 hergestellt werden, indem z.B. Polyetherpolyole mit einem Überschuss Polyisocyanat zu einem NCO-haltigen Prepolymer umgesetzt werden, das dann wiederum mit einem aminofunktionellen Alkoxysilan weiter umgesetzt wird.

Die Veröffentlichungen EP-A 0 397 036, DE-A 19 908 562 (entspr. EP-A 1 093 482) und US-A 2002/0100550 beschreiben weitere unterschiedliche Wege zur Herstellung von alkoxysilanterminierten Polymeren. Gemäß dieser Schriften werden jeweils hochmolekulare Polyether mit einem durchschnittlichen Molekulargewicht von 4000g/mol oder größer eingesetzt.

Die Anmeldung EP-A 0 070 475 beschreibt die Herstellung und Verwendung von alkoxysilanterminierten Polymeren ausgehend von Wasserstoff-aciden Prepolymeren durch Terminierung mit NCO-funktionellen Alkoxysilanen. Zur Prepolymersynthese werden Polyole mit einem Molgewicht von 500 - 6000 g/mol verwendet. Die darin beschriebenen Polymere werden als Bindemittel in Dichtstoffformulierungen, also weichelastischen Systemen, eingesetzt.

Ein analoges Verfahren wird in der Anmeldung DE-A 10 2007 058 344 beschrieben.

Die Möglichkeit, durch die Verwendung von isocyanatfunktionellen Alkoxysilanbausteinen zu besonders niedrigviskosen Prepolymeren zu gelangen wird u.a. in der US-A 4,345,053 offenbart. Hier wird ein OH-funktionelles Prepolymer durch ein isocyanatfunktionelles Alkoxysilan terminiert, was letztlich die Einsparung einer Harnstoff-Gruppe pro Terminierung bedeutet. Allerdings enthält das OH-funktionelle Prepolymer noch Urethangruppen, die aus der Vorverlängerung eines Polyetherpolyols mit Diisocyanat resultieren. Diese können, wie ebenfalls in EP-A 372 561 offenbart, eingespart werden, indem speziell hergestellte langkettige Polyether mit einer geringen Unsättigung und Polydispersität eingesetzt werden. Allerdings werden bei der stöchiometrischen Umsetzung solcher isocyanatfunktioneller Alkoxysilanbausteine Bindemittel erhalten, die aufgrund unzureichender Verkappung vor allem bei der Verwendung sehr langkettiger Polyether bei der Aushärtung nicht ausreichend vernetzen können. Dies führt zu sehr weichen Polymeren mit einer hohen Oberflächenklebrigkeit und einem mangelnden Rückstellvermögen, bzw. einer hohen plastischen Deformierbarkeit.

Die EP-A 1 924 621 (entspr. WO2007025668) beschreibt die Herstellung und Verwendung von alkoxysilanterminierten Polymeren ausgehend von Polyetherpolyolen durch Terminierung mit NCO-funktionellen Alkoxysilanen. Zur Synthese werden Polyole mit einem Molgewicht von 3000 - 20000 g/mol verwendet. Die darin beschriebenen Polymere werden als Bindemittel in Dichtstoffformulierungen, also weichelastischen Systemen, eingesetzt.

Alle diese alkoxysilanterminierten Systeme bilden nach der Aushärtung weichelastische Polymere mit einer relativ geringen Festigkeit und einer hohen Bruchdehnung. Die DE-A 1 745 526 beschreibt für Polyoxypropylenglykol-basierte Polymere Zugfestigkeiten im Bereich von 3,36 kg/cm² bis 28,7 kg/cm². Nur mit kristallisierenden Polycaprolactonen werden höhere Festigkeiten erreicht, die für strukturelle Klebungen ausreichend sind.

Diese Systeme weisen aber den Nachteil auf, dass sie bei Raumtemperatur sehr hochviskos oder sogar fest sind und daher nur warm verarbeitet werden können.

Dementsprechend ist der Anwendungsbereich der oben genannten Anmeldungen einerseits auf Dichtstoffe und weichelastische Klebstoffe, andererseits auf hochviskose oder feste Systeme, die nur warm verarbeitet werden können, beschränkt. Das Dokument DE 10 2007 011 511 A1 offenbart Alkoxysilangruppen aufweisende Prepolymere und deren Verwendung in Klebstoffen. In den Beispielen 1-6 werden Polymere aus Polypropylenglykol (OH-Zahl 56 mg KOH/g) und 3-Isocyanatotrimethoxysilan hergestellt. Die Zugscherfestigkeit in diesen Beispielen beträgt höchstens 4,0 N/mm2. Der vorliegenden Erfindung lag daher die Aufgabe zugrunde, bei Raumtemperatur flüssige, alkoxysilanterminierte Polyurethane zur Verfügung zu stellen, die ausgehärtet eine hohe Kohäsionsfestigkeit erreichen, so dass mit ihnen Klebstoffe formuliert werden können, die strukturelles Kleben ermöglichen.

Es wurde nun gefunden, dass sich derartige alkoxysilanterminierte Polyurethane mit den geforderten Eigenschaften herstellen lassen, indem man Verbindungen mit isocyanatreaktiven Gruppen, die eine Hydroxylzahl - oder entsprechend eine Amin- oder Thiolzahl - größer 30 mg KOH/g mit einem isocyanatfunktionellen Alkoxysilan umsetzt.

Gegenstand der Erfindung ist daher die Verwendung mit Alkoxysilangruppen modifizierter Polymere, die durch Umsetzung
a) von Verbindungen oder Mischungen von Verbindungen mit isocyanatreaktiven Gruppen, die eine Hydroxylzahl bzw. Amin- oder Thiolzahl größer 30 mg KOH/g haben mit
b) einer isocyanatfunktionellen Alkoxysilanverbindung der allgemeinen Formel (I): 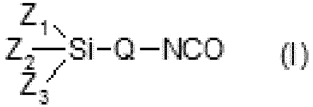 worin
   - Z¹, Z² und Z³: gleiche oder verschiedene C₁-C₈-Alkoxy- oder C₁-C₈-Alkylreste sind, die auch verbrückt sein können, wobei aber an jedem Si-Atom mindestens ein C₁-C₈-Alkoxyrest vorhanden sein muss,
   - Q: ein wenigstens difunktioneller linearer oder verzweigter organischer Rest ist, bevorzugt ein Alkylenradikal mit 1 bis 8 Kohlenstoffatomen,
in Klebstoffen mit einer Zugscherfestigkeit größer 5 N/mm², wobei die Zugscherfestigkeit an einfach überlappten Prüfkörpern aus Buche mit einer Länge von 40mm, einer Breite von 20 mm und einer Dicke von 5 mm mit einer Überlappungslänge von 10 mm und einer Klebspaltdicke von etwa 1 mm an einer Zugprüfmaschine bei einer Vorschubgeschwindigkeit von 100 mm/min ermittelt wird, nachdem die Prüfkörper 7 Tage lang bei 23 °C und 50 % rel. Luftfeuchte, danach 20 Tage bei 40 °C und abschließend einen Tag bei 23 °C und 50 % rel. Luftfeuchte gelagert worden sind.
Dabei kann die Umsetzung von b) mit a) vorzugsweise in einem Verhältnis von 0,8 : 1,0 bis zu 1,5 : 1,0 (NCO : isocyanatreaktivem Wasserstoff) erfolgen.

Die erfindungsgemäßen Verbindungen sind nicht kristallisierende, bei Raumtemperatur flüssige Stoffe. Sie weisen bei 23 °C eine Viskosität von kleiner 20 Pas, bevorzugt kleiner 10 Pas, besonders bevorzugt kleiner 5 Pas auf. Die Viskosität wird dabei entsprechend der im experimentellen Teils beschriebenen Methode bestimmt.

Die erfindungsgemäßen Verbindungen weisen vorzugsweise ein zahlenmittleres Molekulargewicht von weniger als 4500 g/mol auf, besonders bevorzugt von weniger als 4000 g/mol und ganz besonders bevorzugt von weniger als 3000 g/mol auf. Das zahlenmittlere Molekulargewicht wird dabei entsprechend der im experimentellen Teils beschriebenen Methode bestimmt.

In Teil a) können alle dem Fachmann bekannten Verbindungen mit isocyanatreaktiven Gruppen eingesetzt werden, welche eine Funktionalität von im Mittel mindestens zwei aufweisen. Dies können beispielsweise niedermolekulare, multifunktionelle, isocyanatreaktive Verbindungen wie aliphatische Polyole, Polyamine oder Polythiole, aromatische Polyole, Polyamine oder Polythiole sein oder höhermolekulare isocyanatreaktive Verbindungen, wie Polyetherpolyole, Polyetheramine, Polycarbonatpolyole, Polyesterpolyole sowie Polythioetherpolyole sein. Bevorzugt weisen solche isocyanatreaktiven Verbindungen eine mittlere Funktionalität von 2 bis 6, bevorzugt 2 bis 4 und besonders bevorzugt von 2 bis 3 auf.

Bevorzugt handelt es sich hierbei um Polyetherpolyole oder Polyetherpolyamine, besonders bevorzugt um Polyetherpolyole. Diese sind in an sich bekannter Weise durch Alkoxylierung von geeigneten Starter-Molekülen unter Basenkatalyse oder Einsatz von Doppelmetallcyanidverbindungen (DMC-Verbindungen) zugänglich. Geeignete Starter-Moleküle für die Herstellung von Polyetherpolyolen sind Moleküle mit mindestens zwei gegenüber Epoxiden reaktiven Element-Wasserstoffbindungen oder beliebige Gemische derartiger Starter-Moleküle.

Besonders geeignete Polyetherpolyole sind solche der vorstehend genannten Art mit einem Gehalt an ungesättigten Endgruppen von kleiner oder gleich 0,02 Milliäquivalenten pro Gramm Polyol (meq/g), bevorzugt kleiner oder gleich 0,015 meq/g, besonders bevorzugt kleiner oder gleich 0,01 meq/g (Bestimmungsmethode ASTM D2849-69).

Dies ist z.B. in der US-A 5 158 922 (z.B. Beispiel 30) und EP-A 0 654 302 (S. 5, Z. 26 bis S. 6, Z. 32) beschrieben.

Geeignete Starter-Moleküle für die Herstellung von Polyetherpolyolen sind beispielsweise Wasser, oder einfache, niedermolekulare Alkohole, wie beispielsweise Methanol, Ethanol, Ethylenglykol, Propandiol-1,2, 2,2-Bis(4-hydroxyphenyl)propan, Propylenglykol-1,3- und Butandiol-1,4, Hexandiol-1,6, Neopentylglykol, 2-Ethylhexandiol-1,3, Trimethylolpropan, Glyzerin, Pentaerythrit, Sorbit, organische Polyamine mit mindestens zwei N-H-Bindungen wie z.B. Triethanolamin, Ammoniak, Methylamin oder Ethylendiamin oder beliebige Gemische derartiger Starter-Moleküle. Für die Alkoxylierung geeignete Alkylenoxide sind insbesondere Ethylenoxid und/oder Propylenoxid, die in beliebiger Reihenfolge oder auch im Gemisch bei der Alkoxylierung eingesetzt werden können.

Es können auch Polyetherpolyolmischungen eingesetzt werden, die ein Polyol mit wenigstens einer tertiären Aminogruppe enthalten. Solche tertiäre Aminogruppen aufweisenden Polyetherpolyole lassen sich durch Alkoxylierung von Startermolekülen oder Mischungen von Startermolekülen, wenigstens enthaltend ein Startermolekül mit mindestens 2 gegenüber Epoxiden reaktiven Element-Wasserstoffbindungen, von denen mindestens eine eine NH-Bindung ist, oder niedermolekulare Polyolverbindungen, die tertiäre Aminogruppen tragen, herstellen. Beispiele für geeignete Startermoleküle sind Ammoniak, Methylamin, Ethylamin, n-Propylamin, isoPropylamin, Ethanolamin, Diethanolamin, Triethanolamin, Ethylendiamin, Ethylentriamin, Triethanolamin, N-Methyl-diethanolamin, Ethylendiamin, N,N'-Dimethyl-ethylendiamin, Tetramethylendiamin, Hexamethylendiamin, 2,4-Toluylendiamin, 2,6-Toluylendiamin, Anilin, Diphenylmethan-2,2'-diamin, Diphenylmethan-2,4'-diamin, Diphenylmethan-4,4'-diamin, 1-Aminomethyl-3-amino-1,5,5-trimethylcyclohexan (Isophorondiamin), Dicyclohexylmethan-4,4'-diamin, Xylylendiamin und Polyoxyalkylenamine.

Einsetzbar sind auch die durch Polymerisation von Tetrahydrofuran erhältlichen Polytetramethylenetherglykole, aber auch Hydroxylgruppen enthaltende Polybutadiene.

Unter den Hydroxylpolycarbonaten sind Umsetzungsprodukte von Glykolen vom Typ Ethylenglykol, Diethylenglykol, 1,2-Propylenglykol, 1,4-Butandiol, Neopentylglykol oder 1,6-Hexandiol und/oder Triolen wie beispielsweise Glyzerin, Trimethylolpropan, Pentaerythrit oder Sorbit mit Diphenyl- und/oder Dimethylcarbonat zu verstehen. Die Umsetzung ist eine Kondensationsreaktion, bei der Phenol und/oder Methanol abgespalten werden.

Eingesetzt werden können auch Polyethercarbonatpolyole, wie sie beispielsweise durch katalytische Umsetzung von Alkylenoxiden (Epoxiden) und Kohlendioxid in Anwesenheit von H-funktionellen Startersubstanzen erhältlich sind (siehe z.B. EP-A 2 046 861).

Unter den Hydroxylpolyestern sind Umsetzungsprodukte von aliphatischen, cycloaliphatischen, aromatischen und/oder heterocyclischen mehrbasischen, vorzugsweise aber zweibasischen Carbonsäuren, wie beispielsweise Adipinsäure, Azelainsäure, Sebazin und/oder Dodecandisäure, Phthalsäure, Isophthalsäure, Bernsteinsäure, Korksäure, Trimellitsäure, Phthalsäureanhydrid, Tetrahydrophthalsäureanhydrid, Glutarsäureanhydrid, Tetrachlorphthalsäureanhydrid, Endomethylentetrahydrophthalsäureanhydrid, Maleinsäureanhydrid, Maleinsäure, Fumarsäure, dimere und trimere Fettsäuren wie Ölsäure, gegebenenfalls in Mischung mit monomeren Fettsäuren, Terephthalsäuredimethylester oder Terephthalsäure-bis-glykolester, ortho-, iso oder Terephthalsäure mit mehrwertigen, vorzugsweise zweiwertigen oder dreiwertigen Alkoholen wie beispielsweise Ethylenglykol, Diethylenglykol, Triethylenglykol, Tetraethylenglykol, 1,2-/1,3-Propandiolund, -1,4-/1,3-Butandiol, 1,6-Hexandiol, 1,8-Octandiol, Neopentylglykol, 1,4-Bis(hydroxymethyl)cyclohexan, Bis(hydroxymethyl)tricyclo[5.2.1.0²⁶]decan oder 1,4-Bis(2-hydroxyethoxy)benzol, 2-Methyl-1,3-propandiol, 2,2,4-Trimethylpentandiol, 2-Ethyl-1,3-hexandiol, Dipropylenglykol, Polypropylenglykole, Dibutylenglykol, Polybutylenglykole, 1,4-Phenoldimethanol, Bisphenol A, Tetrabrombisphenol A, Glycerin, Trimethylolpropan, 1,2,6-Hexantriol, 1,2,4-Butantriol, Pentaerythrit, Chinit, Mannit, Sorbit, Methylglykosid oder 4,3,6-Dianhydrohexite zu verstehen. Anstelle der freien Polycarbonsäuren können auch die entsprechenden Polycarbonsäureanhydride oder entsprechende Polycarbonsäureester von niedrigen Alkoholen oder deren Gemische zur Herstellung des Polyesters mitverwendet werden.

Zu nennen sind hier auch insbesondere die Produkte, die sich von Umsetzungsprodukten von Glyzerin und Hydroxylfettsäuren ableiten, insbesondere Rizinusöl und seine Derivate, wie beispielsweise einfach dehydratisiertes Rizinusöl.

Einsetzbar sind auch entsprechende Hydroxylgruppenterminierte Poly-ε-Caprolactone.

In Teil a) können neben bzw. anstelle der Polyhydroxyverbindungen auch Polyamine, beispielsweise Polyetheramine oder auch Polythiole eingesetzt werden. Bezüglich der bevorzugten Amin- oder Thiolzahlen gelten die gleichen Grenzen, wie bereits für die Hydroxylzahlen der Polyhydroxyverbindungen aufgezählt.

Isocyanatfunktionelle Alkoxysilanverbindung der allgemeinen Formel (I) (Teil b)) sind grundsätzlich alle alkoxysilangruppenhaltigen Monoisocyanate mit einem Molekulargewicht von 140 g/mol bis 500 g/mol geeignet. Beispiele für solche Verbindungen sind Isocyanatomethyltrimethoxysilan, Isocyanatomethyltriethoxysilan, (Isocyanatomethyl)methyldimethoxysilan, (Isocyanatomethyl)-methyldiethoxysilan, 3-Isocyanatopropyltrimethoxysilan, 3-Isocyanatopropylmethyl-dimethoxysilan, 3-Isocyanatopropyltriethoxysilan und 3-Isocyanatopropylmethyldiethoxysilan. Bevorzugt ist hier die Verwendung von 3-Isocyanatopropyltrimethoxysilan.

Es ist erfindungsgemäß auch möglich, isocyanatfunktionelle Silane zu verwenden, die durch Umsetzung eines Diisocyanates mit einem Amino- oder Thiosilan hergestellt wurden, wie sie in der US-A 4,146,585 oder der EP-A 1 136 495 beschrieben werden.

Die Umsetzung von b) mit a) erfogt vorzugsweise in einem Verhältnis von 0,8 : 1,0 bis zu 1,5 : 1,0 (NCO : isocyanatreaktivem Wasserstoff), besonders bevorzugt in einem Verhältnis von 1,0 : 1,0 bis 1,5 : 1,0, ganz besonders bevorzugt in einem Verhältnis von 1,0 : 1,0 bis 1,2 : 1,0. Bevorzugt wird das Isocyanat equimolar oder im Überschuss eingesetzt, jedenfalls so, dass die resultierenden erfindungsgemäßen Polymere vollständig alkoxysilanterminiert sind. Erforderlichenfalls ist das für eine spezifische Stoffkombination von b) und a) optimale Verhältnis durch orientierende Vorversuche zu ermitteln, was eine für den Fachmann übliche Vorgehensweise ist.

Wird ein Überschuss von Teil b) eingesetzt, so wird die Urethanisierung der Teile a) und b) bis zum vollständigen Umsatz der NCO-Gruppen durchgeführt.

Bei Verwendung eines Unterschusses von Teil a) wird die Urethanisierung der Teile a) und b) fortgeführt, bis ein vollständiger Umsatz der isocyanatreaktiven-Gruppen erreicht ist. Um den vollständigem Umsatz aller isocyanatreaktiven-Gruppen zu gewährleisten, ist es bevorzugt, auch nach Erreichen des theoretischen NCO-Gehalts die Reaktionsbedingungen beizubehalten bis eine Konstanz des NCO-Gehalts beobachtet wird.

Für den weiteren Abbau des NCO-Gehalts des Reaktionsproduktes der Teile a) und b) sind, wie in EP-A 1 924 621 beschrieben, zwei Wege möglich: Die erste Möglichkeit beinhaltet die Zugabe einer weiteren NCO-reaktiven Komponente, die in einem anschließenden Reaktionsschritt mit den verbleibenden NCO-Gruppen zur Reaktion gebracht wird. Dies können beispielsweise niedermolekulare Alkohole sein.

Die zweite Möglichkeit für den weiteren Abbau des NCO-Gehaltes des Reaktionsproduktes der Teile a) und b) ist eine Allophanatisierungsreaktion. Dabei werden die verbleibenden NCO-Gruppen mit den zuvor gebildeten Urethan-Gruppen, bevorzugt durch Zugabe eines die Allophanatisierung fördernden Katalysators, zur Reaktion gebracht.

Der Verlauf der Urethanisierungsreaktion kann durch geeignete im Reaktionsgefäß installierte Messgeräte und/oder anhand von Analysen entnommener Proben verfolgt werden. Geeignete Verfahren sind dem Fachmann bekannt. Es handelt sich beispielsweise um Viskositätsmessungen, Messungen des NCO-Gehalts, des Brechungsindex, des OH-Gehalts, Gaschromatographie (GC), kernmagnetische Resonanzspektroskopie (NMR), Infrarotspektroskopie (IR) und nahe Nahinfrarotspektroskopie (NIR). Vorzugsweise wird der NCO-Gehalt der Mischung titrimetrisch bestimmt.

Die Umsetzung Teil a) mit Teil b) erfolgt bevorzugt in einem Temperaturbereich von 20 °C bis 200 °C, besonders bevorzugt innerhalb von 40 °C bis 120 °C und besonders bevorzugt von 60 °C bis 100 °C.

Es ist unerheblich, ob das Verfahren kontinuierlich z.B. in einem Statik-Mischer, Extruder oder Kneter oder diskontinuierlich z.B. in einem Rührreaktor durchgeführt wird.

Bevorzugt wird das Verfahren in einem Rührreaktor durchgeführt.

Ein weiterer Gegenstand der Erfindung sind Klebstoffe, Beschichtungen oder Schäume basierend auf den erfindungsgemäßen Polymeren. Diese Klebstoffe, Beschichtungen oder Schäume vernetzen unter Einwirkung von Luftfeuchtigkeit über eine Silanolpolykondensation. Bevorzugt ist der Einsatz der erfindungsgemäßen Polymeren in Beschichtungen und Klebstoffen, besonders bevorzugt in Klebstoffen, die nach der im experimentellen Teil beschriebenen Messmethode eine Zugscherfestigkeit von mindestens 5 N/mm² aufweisen.

Zur Herstellung solcher Klebstoffe, Beschichtungen und Schäume können die erfindungsgemäßen Alkoxysilan-Endgruppen aufweisenden Polymere zusammen mit üblichen Löse- oder Treibmitteln, Weichmachern, Flammschutzmitteln, Füllstoffen, Pigmenten, Trockenmitteln, Additiven, Lichtschutzmitteln, Antioxidantien, Thixotropiermitteln, Katalysatoren, Haftvermittlern und gegebenenfalls weiteren Hilfs- und Zusatzstoffen nach bekannten Verfahren formuliert werden.

Typische erfindungsgemäße Schäume, Klebstoff- und Beschichtungszubereitungen enthalten beispielsweise 5 Gew.-% bis 100 Gew.-% eines mit Alkoxysilangruppen modifizierten Polymers nach Anspruch 1 oder eines Gemisches aus zwei oder mehreren solcher mit Alkoxysilangruppen modifizierten Polymere, bis zu 50 Gew.-% eines Weichmachers/Flammschutzmittels oder eines Gemisches aus zwei oder mehreren Weichmachern, bis zu 95 Gew.-% eines Löse-/Treibmittels oder eines Gemisches aus zwei oder mehreren Löse-/Treibmitteln, bis zu 20 Gew.-% eines Feuchtigkeits-Stabilisators oder eines Gemisches aus zwei oder mehreren Feuchtigkeits-Stabilisatoren, bis zu 5 Gew.-% eines Alterungsschutzmittels oder eines Gemisches aus zwei oder mehreren Alterungsschutzmitteln, bis zu 5 Gew.-% eines Katalysators oder eines Gemisches aus zwei oder mehreren Katalysatoren und bis 80 Gew.-% eines Füllstoffs oder eines Gemisches aus zwei oder mehreren Füllstoffen.

Als Treibmittel kann im einfachsten Falle Luft oder Stickstoff eingesetzt werden, jedoch können selbstverständlich auch alle anderen, aus der Polyurethanchemie an sich bekannten, Treibmittel zum Aufschäumen der erfindungsgemäßen Zusammensetzung eingesetzt werden. Genannt seien beispielsweise *n*-Butan, *i*-Butan, Propan und Dimethylether, sowie Mischungen der vorgenannten.

Als geeignete Füllstoffe seien beispielhaft Ruße, Fällungskieselsäuren, pyrogene Kieselsäuren, mineralische Kreiden und Fällungskreiden oder auch faserige Füllstoffe genannt. Als geeignete Weichmacher seien beispielhaft Phthalsäureester, Adipinsäureester, Alkylsulfonsäureester des Phenols, Phosphorsäureester oder auch höhermolekulare Polypropylenglykole genannt.

Als Flammschutzmittel können die typischen halogen- oder phosphorhaltigen Verbindungen eingesetzt werden, ebenso anorganische Flammschutzmittel wie beispielsweise Aluminiumoxidhydrat.

Als Thixotropiermittel seien beispielhaft pyrogene Kieselsäuren, Polyamide, hydrierte Rizinusöl-Folgeprodukte oder auch Polyvinylchlorid genannt.

Als geeignete Katalysatoren zur Aushärtung der erfindungsgemäßen Klebstoffe, Beschichtungen oder Schäume können alle metallorganischen Verbindungen und aminischen Katalysatoren eingesetzt werden, die bekanntermaßen die Silanpolykondensation fördern. Besonders geeignete metallorganische Verbindungen sind insbesondere Verbindungen des Zinns und des Titans. Bevorzugte Zinnverbindungen sind beispielsweise: Dibutylzinndiacetat, Dibutylzinndilaurat, Dioctylzinnmaleat und Zinncarboxylate wie beispielsweise Zinn(II)octoat oder Dibutylzinn-bisacetoacetonat. Die genannten Zinnkatalysatoren können gegebenenfalls in Kombination mit aminischen Katalysatoren wie Aminosilanen oder 1,4-Diazabicyclo[2.2.2]octan verwendet werden. Bevorzugte Titanverbindungen sind beispielsweise Alkyltitanate, wie Diisobutyl-bisacetessigsäureethylester-titanat. Für die alleinige Verwendung von aminischen Katalysatoren sind insbesondere solche geeignet, die eine besonders hohe Basenstärke aufweisen, wie Amine mit Amidin-Struktur. Bevorzugte aminische Katalysatoren sind daher beispielsweise 1,8-Diazabicyclo[5.4.0]undec-7-en oder 1,5-Diazabicyclo[4.3.0]non-5-en. Auch Brönstedtsäuren können die Silankondensation katalysieren. Es können alle Säuren eingesetzt werden, die mit der jeweiligen Formulierung kompatibel sind. Beispielhaft sind hier *p*-Toluolsulfonsäure, Dodecylbenzolsulfonsäure oder auch Zitronensäure genannt.

Als Trockenmittel seien insbesondere Alkoxysilylverbindungen genannt wie Vinyltrimethoxysilan, Methyltrimethoxysilan, *i*-Butyltrimethoxysilan, Hexadecyltrimethoxysilan.

Als Haftvermittler werden die bekannten funktionellen Silane eingesetzt wie beispielsweise Aminosilane der vorstehend genannten Art aber auch N-Aminoethyl-3-aminopropyl-trimethoxy und/oder N-Aminoethyl-3-aminopropyl-methyl-dimethoxysilan, Epoxysilane und/oder Mercaptosilane.

Die nachfolgenden Beispiele veranschaulichen die vorliegende Erfindung, ohne sie zu beschränken.

### Beispiele

Alle Prozentangaben beziehen sich, sofern nicht abweichend angegeben, auf Gewichtsprozent (Gew.-%).

Die zur Zeit der Versuchsdurchführung herrschende Umgebungstemperatur von 23 °C wird als RT (Raumtemperatur) bezeichnet.

Die nachstehend aufgeführten Methoden zur Bestimmung der entsprechenden Parameter wurden zur Durchführung bzw. Auswertung der Beispiele angewendet und sind auch die Methoden zur Bestimmung der erfindungsgemäß relevanten Parameter im allgemeinen.

### Bestimmung des Isocyanatgehalts

Die Bestimmung der NCO-Gehalte in Gew.-% wurde gemäß DIN EN ISO 11909 durch Rücktitration mit 0,1 mol/l Salzsäure nach Reaktion mit Butylamin vorgenommen.

### Bestimmung der Viskosität

Die Viskositätsmessungen wurden gemäß ISO/DIN 3219:1990 bei einer konstanten Temperatur von 23 °C und einer konstanten Scherrate von 250/sec mit einem Platte-Kegel Rotationsviskosimeter des Typs Physica MCR (Fa. Anton Paar Germany GmbH, Ostfildern, DE) unter Verwendung des Messkegels CP 25-1 (25mm Durchmesser, 1° Kegelwinkel) durchgeführt.

### Bestimmung des Molekulargewichts

Das Molekulargewicht wurde mit Hilfe einer GPC-Messung bestimmt, mit Polystyrol (PSS Polymer-Standard-Service GmbH, Mainz) als Standard. Als Gerät wurde ein Hewlett Packard 1100 Series II verwendet, das folgende Säulen enthielt:
1. Nucleogel GPC 10 P 50 x 7.8 mm; Macherey-Nagel
2. Nucleogel GPC 106-10 300 x 7.8 mm; Macherey -Nagel
3. Nucleogel GPC 104-10 300 x 7.8 mm; Macherey -Nagel
4. Nucleogel GPC 500-10 300 x 7.8 mm; Macherey -Nagel
5. Nucleogel GPC 100-10 300 x 7.8 mm; Macherey -Nagel

Als mobile Phase wurde Tetrahydrofuran benutzt, die Duchflussrate betrug 0,6 mL/min, der Druck 42 Bar und die Temperatur 30°C.

### Beispiel 1 (erfindungsgemäß):

In einem 3L-Sulfierbecher mit Deckel, Rührer, Thermometer und Stickstoffdurchfluss wurden 2070,3 g Polyethertriol aufgebaut aus Propylenoxid und Ethylenoxid (13 Gew. %) mit einer Hydroxylzahl von 56 mg KOH/g und 0,07 g Dibutylzinndilaurat (Desmorapid® Z, Bayer MaterialScience AG) auf 60 °C erwärmt. Anschließend wurden bei 60 °C 409,2 g 3-Isocyanatopropyltrimethoxysilan zugegeben, und es wurde gerührt, bis zum Erreichen des theoretischen NCO-Gehaltes von 0,05 %. Der Überschuss NCO wurde durch Zugabe von Methanol abgefangen. Das erhaltene alkoxysilanendgruppenaufweisende Polymer hatte eine Viskosität von 1900 mPas (23 °C) und ein zahlenmittleres Molekulargewicht von 4200 g/mol.

### Beispiel 2 (erfindungsgemäß):

In einem 2L-Sulfierbecher mit Deckel, Rührer, Thermometer und Stickstoffdurchfluss wurden 813,4 g auf Ethylendiamin gestartetes Poly(oxypropylen)tetrol mit einer Hydroxylzahl von 60 mg KOH/g und 0,05 g Dibutylzinndilaurat (Desmorapid® Z, Bayer MaterialScience AG) auf 60 °C erwärmt. Anschließend wurden bei 60 °C 186,6 g 3-Isocyanatopropyltrimethoxysilan zugegeben, und es wurde gerührt, bis zum Erreichen des theoretischen NCO-Gehaltes von 0,05 %. Der Überschuss NCO wurde durch Zugabe von Methanol abgefangen. Das erhaltene alkoxysilanendgruppenaufweisende Polymer hatte eine Viskosität von 2400 mPas (23 °C) und ein zahlenmittleres Molekulargewicht von 4200 g/mol.

### Beispiel 3 (erfindungsgemäß):

In einem 2L-Sulfierbecher mit Deckel, Rührer, Thermometer und Stickstoffdurchfluss wurden 702,3 g Polypropylenglykol mit einer Hydroxylzahl von 112 mg KOH/g und 0,05 g Dibutylzinndilaurat (Desmorapid® Z, Bayer MaterialScience AG) auf 60 °C erwärmt. Anschließend wurden bei 60 °C 297,7 g 3-Isocyanatopropyltrimethoxysilan zugegeben, und es wurde gerührt, bis zum Erreichen des theoretischen NCO-Gehaltes von 0,05 %. Der Überschuss NCO wurde durch Zugabe von Methanol abgefangen. Das erhaltene alkoxysilanendgruppenaufweisende Polymer hatte eine Viskosität von 760 mPas (23 °C) und ein zahlenmittleres Molekulargewicht von 1900 g/mol.

### Beispiel 4 (erfindungsgemäß):

In einem 2L-Sulfierbecher mit Deckel, Rührer, Thermometer und Stickstoffdurchfluss wurden 339,0 g Polypropylenglykol mit einer Hydroxylzahl von 515 mg KOH/g und 0,05 g Dibutylzinndilaurat (Desmorapid® Z, Bayer MaterialScience AG) auf 60 °C erwärmt. Anschließend wurden bei 60 °C 661,0 g 3-Isocyanatopropyltrimethoxysilan zugegeben, und es wurde gerührt, bis zum Erreichen des theoretischen NCO-Gehaltes von 0,05 %. Der Überschuss NCO wurde durch Zugabe von Methanol abgefangen. Das erhaltene alkoxysilanendgruppenaufweisende Polymer hatte eine Viskosität von 480 mPas (23 °C) und ein zahlenmittleres Molekulargewicht von 710 g/mol.

### Beispiel 5 (erfindungsgemäß):

In einem 2L-Sulfierbecher mit Deckel, Rührer, Thermometer und Stickstoffdurchfluss wurden 432,2 g Jeffamine® SD-231 mit einer Aminzahl von 356 mg KOH/g auf 60 °C erwärmt. Anschließend wurden bei 60 °C 570,3 g 3-Isocyanatopropyltrimethoxysilan zugegeben, und es wurde gerührt, bis zum Erreichen des theoretischen NCO-Gehaltes von 0,05 %. Der Überschuss NCO wurde durch Zugabe von Methanol abgefangen. Das erhaltene alkoxysilanendgruppenaufweisende Polymer hatte eine Viskosität von 5000 mPas (23 °C) und ein zahlenmittleres Molekulargewicht von 650 g/mol.

### Beispiel 6 (erfindungsgemäß):

In einem 2L-Sulfierbecher mit Deckel, Rührer, Thermometer und Stickstoffdurchfluss wurden 832,2 g Jeffamine® D-2000 mit einer Aminzahl von 56 mg KOH/g auf 60 °C erwärmt. Anschließend wurden bei 60 °C 170,3 g 3-Isocyanatopropyltrimethoxysilan zugegeben, und es wurde gerührt, bis zum Erreichen des theoretischen NCO-Gehaltes von 0,05 %. Der Überschuss NCO wurde durch Zugabe von Methanol abgefangen. Das erhaltene alkoxysilanendgruppenaufweisende Polymer hatte eine Viskosität von 3450 mPas (23 °C) und ein zahlenmittleres Molekulargewicht von 3100 g/mol.

### Vergleichsbeispiel 1:

In einem 2L-Sulfierbecher mit Deckel, Rührer, Thermometer und Stickstoffdurchfluss wurden 882,2 g Polypropylenglykol mit einer Hydroxylzahl von 28 mg KOH/g und 0,05 g Dibutylzinndilaurat (Desmorapid® Z, Bayer MaterialScience AG) auf 60 °C erwärmt. Anschließend wurden bei 60 °C 115,9 g 3-Isocyanatopropyltrimethoxysilan zugegeben, und es wurde gerührt, bis zum Erreichen des theoretischen NCO-Gehaltes von 0,05 %. Der Überschuss NCO wurde durch Zugabe von Methanol abgefangen. Das erhaltene alkoxysilanendgruppenaufweisende Polymer hatte eine Viskosität von 2400 mPas (23 °C) und ein zahlenmittleres Molekulargewicht von 4900 g/mol.

### Vergleichsbeispiel 2

In einem 2L-Sulfierbecher mit Deckel, Rührer, Thermometer und Stickstoffdurchfluss wurden 902,2 g Poly(oxypropylen)triol mit einer Hydroxylzahl von 28 mg KOH/g und 0,15 g Dibutylzinndilaurat (Desmorapid® Z, Bayer MaterialScience AG) auf 60 °C erwärmt. Anschließend wurden bei 60 °C 97,8 g 3-Isocyanatopropyltrimethoxysilan zugegeben, und es wurde gerührt, bis zum Erreichen des theoretischen NCO-Gehaltes von 0,05 %. Der Überschuss NCO wurde durch Zugabe von Methanol abgefangen. Das erhaltene alkoxysilanendgruppenaufweisende Polymer hatte eine Viskosität von 3200 mPas (23 °C) und ein zahlenmittleres Molekulargewicht von 5000 g/mol.

### Anwendungstechnische Beispiele

Zur Beurteilung der anwendungstechnischen Eigenschaften der verschiedenen Polymere wurden diese in folgender Klebstoffformulierung verarbeitet:

| | **Einsatzmenge in Gew.%** |
|---|---|
| Polymer | 46,06 |
| Füllstoff (Socal® U₁S₂) | 49,75 |
| Trocknungsmittel (Dynasylan® VTMO) | 2,76 |
| Haftvermittler (Dynasylan® 1146) | 1,38 |
| Katalysator (Lupragen® N700) | 0,05 |

Zur Herstellung der Formulierung wird das Polymer mit dem Füllstoff (Socal® U1S2; Fa. Solvay GmbH) und dem Trocknungsmittel (Dynasylan® VTMO; Fa. Evonik AG) versetzt und in einem Vakuumdissolver mit Wandabstreifer bei 3000U/min vermischt. Anschließend wird der Haftvermittler (Dynasylan® 1146; Fa. Evonik AG) hinzugefügt und innerhalb von 5 min bei 1000 U/min untergerührt. Zuletzt wird der Katalysator (Lupragen® N700; Fa. BASF SE) bei 1000 U/min eingerührt und abschließend die fertige Mischung im Vakuum entlüftet.

### Bestimmung der Hautbildezeit

Mittels eines Rakels (200 µm) wird ein Film des Klebstoffs auf eine vorher mit Ethylacetat gereinigte Glasplatte aufgetragen und sofort in den Drying Recorder eingelegt. Die Nadel wird mit 10 g belastet und bewegt sich über eine Zeitraum von 24 Stunden über eine Strecke von 35 cm.

Der Drying Recorder befindet sich in einem Klimaraum bei 23 °C und 50 % rel. Luftfeuchte.

Als Hautbildezeit wird der Zeitpunkt des Verschwindens der permanenten Spur der Nadel aus dem Film angegeben.

Die Hautbildezeit wurde 1 Tag nach Herstellung der entsprechenden Formulierung bestimmt.

### Bestimmung der Zugscherfestigkeit

Zur Bestimmung der Zugscherfestigkeit werden einfach überlappte Prüfkörper aus Buche mit einer Überlappungslänge von 10 mm und einer Klebspaltdicke von etwa 1 mm verwendet. Die dazu benötigten Buchenholzstücke weisen folgende Maße auf: Länge = 40mm, Breite = 20mm, Dicke = 5mm. Die Prüfkörper werden für 7 Tage bei 23 °C und 50 % rel. Luftfeuchte, danach 20 Tage bei 40 °C und abschließend einen Tag bei 23 °C und 50 % rel. Luftfeuchte gelagert.

Die Messung der Zugscherfestigkeit erfolgt an eine Zugprüfmaschine bei einer Vorschubgeschwindigkeit von 100 mm/min.

Die folgende Tabelle zeigt die erhaltenen Ergebnisse:

| | **Vergleichsbeispiel Nr.** | | **Beispiel Nr.** | | | | | |
|---|---|---|---|---|---|---|---|---|
| | **1** | **2** | **1** | **2** | **3** | **4** | **5** | **6** |
| OH-/NH-Zahl des Polyethers [mg KOH/g] | 28 | 28 | 56 | 60 | 112 | 515 | 56 | 356 |
| Hautbildezeit [min] | 60 | 45 | 30 | 25 | 255 | 75 | 215 | 270 |
| Zugscherfestigkeit [N/mm²] | 3,1 | 4,2 | 6,3 | 7,8 | 6,1 | 8,4 | 6,4 | 10,1 |

## Patentansprüche

1. Verwendung von mit Alkoxysilangruppen modifizierte Polymere, die erhältlich sind durch Umsetzung von
a) Verbindungen oder Mischungen von Verbindungen mit isocyanatreaktiven Gruppen, die eine Hydroxylzahl bzw. Amin- oder Thiolzahl größer 30 mg KOH/g haben
mit
b) einer isocyanatfunktionellen Alkoxysilanverbindung der allgemeinen Formel (I): 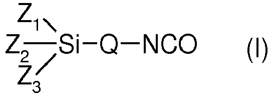 worin
Z¹, Z² und Z³ gleiche oder verschiedene C₁-C₈-Alkoxy- oder C₁-C₈-Alkylreste sind, die auch verbrückt sein können, wobei aber an jedem Si-Atom mindestens ein C₁-C₈-Alkoxyrest vorhanden sein muss,
Q ein wenigstens difunktioneller linearer oder verzweigter organischer Rest ist, bevorzugt ein Alkylenradikal mit 1 bis 8 Kohlenstoffatomen,
in Klebstoffen mit einer Zugscherfestigkeit größer 5 N/mm², wobei die Zugscherfestigkeit an einfach überlappten Prüfkörpern aus Buche mit einer Länge von 40mm, einer Breite von 20 mm und einer Dicke von 5 mm mit einer Überlappungslänge von 10 mm und einer Klebspaltdicke von etwa 1 mm an einer Zugprüfmaschine bei einer Vorschubgeschwindigkeit von 100 mm/min ermittelt wird, nachdem die Prüfkörper 7 Tage lang bei 23 °C und 50 % rel. Luftfeuchte, danach 20 Tage bei 40 °C und abschließend einen Tag bei 23 °C und 50 % rel. Luftfeuchte gelagert worden sind.

2. Verwendung gemäß Anspruch 1, **dadurch gekennzeichnet, dass** für die isocyanatfunktionellen Alkoxysilanverbindungen gemäß Formel (I) X, Y, und Z unabhängig voneinander eine Methoxy- oder Ethoxygruppe und R ist ein Methylen- oder Propylenradikal bedeuten.

3. Verwendung gemäß Anspruch 1, **dadurch gekennzeichnet, dass** zur Herstellung der Alkoxysilangruppen-modifizierten Polyurethane Polyhydroxyverbindungen als Verbindungen mit isocyanatreaktiven Gruppen eingesetzt werden.

4. Verwendung gemäß Anspruch 1, **dadurch gekennzeichnet, dass** zur Herstellung der Alkoxysilangruppen-modifizierten Polyurethane Polyetherpolyole als Verbindungen mit isocyanatreaktiven Gruppen eingesetzt werden.

5. Verwendung gemäß Anspruch 1, **dadurch gekennzeichnet, dass** die eingesetzten Alkoxysilangruppen-modifizierten Polyurethane bei 23 °C eine Viskosität bestimmt gemäß ISO/DIN 3219:1990 bei einer konstanten Temperatur von 23 °C und einer konstanten Scherrate von 250/sec mit einem Platte-Kegel Rotationsviskosimeter des Typs Physica MCR (Fa. Anton Paar Germany GmbH, Ostfildern, DE) unter Verwendung des Messkegels CP 25-1 (25mm Durchmesser, 1° Kegelwinkel) von kleiner 20 Pa·s aufweisen.

6. Verwendung gemäß Anspruch 5, **dadurch gekennzeichnet, dass** die eingesetzten Alkoxysilangruppen-modifizierten Polyurethane bei 23 °C eine Viskosität von kleiner 10 Pa·s aufweisen.

7. Verwendung gemäß Anspruch 5, **dadurch gekennzeichnet, dass** die eingesetzten Alkoxysilangruppen-modifizierten Polyurethane bei 23 °C eine Viskosität von kleiner 5 Pa·s aufweisen.

8. Klebstoff mit einer mit einer Zugscherfestigkeit größer 5 N/mm², wobei die Zugscherfestigkeit an einfach überlappten Prüfkörpern aus Buche mit einer Länge von 40mm, einer Breite von 20 mm und einer Dicke von 5 mm mit einer Überlappungslänge von 10 mm und einer Klebspaltdicke von etwa 1 mm an einer Zugprüfmaschine bei einer Vorschubgeschwindigkeit von 100 mm/min ermittelt wird, nachdem die Prüfkörper 7 Tage lang bei 23 °C und 50 % rel. Luftfeuchte, danach 20 Tage bei 40 °C und abschließend einen Tag bei 23 °C und 50 % rel. Luftfeuchte gelagert worden sind, enthaltend
5 Gew.-% bis 100 Gew.-% eines mit Alkoxysilangruppen modifizierten Polymers, das durch Umsetzung von
a) Verbindungen oder Mischungen von Verbindungen mit isocyanatreaktiven Gruppen, die eine Hydroxylzahl bzw. Amin- oder Thiolzahl größer 30 mg KOH/g haben
mit
b) einer isocyanatfunktionellen Alkoxysilanverbindung der allgemeinen Formel (I): 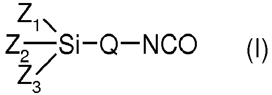 worin
Z¹, Z² und Z³ gleiche oder verschiedene C₁-C₈-Alkoxy- oder C₁-C₈-Alkylreste sind, die auch verbrückt sein können, wobei aber an jedem Si-Atom mindestens ein C₁-C₈-Alkoxyrest vorhanden sein muss,
Q ein wenigstens difunktioneller linearer oder verzweigter organischer Rest ist, bevorzugt ein Alkylenradikal mit 1 bis 8 Kohlenstoffatomen,
erhältlich ist,
0 Gew.-% bis 30 Gew.-% eines Weichmachers oder eines Gemisches aus zwei oder mehreren Weichmachern
0 Gew.-% bis 30 Gew.-% eines Lösemittels oder eines Gemisches aus zwei oder mehreren Lösemitteln
0 Gew.-% bis 5 Gew.-% eines Feuchtigkeits-Stabilisators oder eines Gemisches aus zwei oder mehreren Feuchtigkeits-Stabilisatoren
0 Gew.-% bis 5 Gew.-% eines Alterungsschutzmittels oder eines Gemisches aus zwei oder mehreren Alterungsschutzmitteln.
0 Gew.-% bis 5 Gew.-% eines Katalysators oder eines Gemisches aus zwei oder mehreren Katalysatoren
0 Gew.-% bis 80 Gew.-% eines Füllstoffs oder eines Gemisches aus zwei oder mehreren Füllstoffen.

9. Unter Verwendung von Klebstoffen gemäß Anspruch 8 verbundene Substrate.

## Claims

1. Use of polymers modified with alkoxysilane groups and obtainable by reaction of
a) compounds or mixtures of compounds with isocyanate-reactive groups, having a hydroxyl number and/or amine or thiol number of greater than 30 mg KOH/g,
with
b) an isocyanate-functional alkoxysilane compound of the general formula (I): 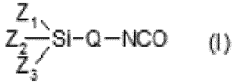 in which
Z¹, Z² and Z³ are identical or different C₁-C₈ alkoxy or C₁-C₈ alkyl moieties, which may also be bridged, but where there must be at least one C₁-C₈ alkoxy moiety on each Si atom,
Q is an at least difunctional linear or branched organic moiety, preferably an alkylene radical having 1 to 8 carbon atoms,
in adhesives having a lap shear strength of greater than 5 N/mm², the lap shear strength being determined on singly overlapped test specimens of beech with a length of 40 mm, a width of 20 mm and a thickness of 5 mm, with an overlap length of 10 mm and a bond gap thickness of about 1 mm, on a tensile testing machine with a rate of advance of 100 mm/min, following storage of the test specimens for 7 days at 23°C and 50% relative humidity, then 20 days at 40°C and lastly one day at 23°C and 50% relative humidity.

2. Use according to Claim 1, **characterized in that** for the isocyanate-functional alkoxysilane compounds of formula (I), X, Y and Z independently of one another are a methoxy or ethoxy group and R is a methylene or propylene radical.

3. Use according to Claim 1, **characterized in that** the alkoxysilane group-modified polyurethanes are prepared using polyhydroxy compounds as compounds having isocyanate-reactive groups.

4. Use according to Claim 1, **characterized in that** the alkoxysilane group-modified polyurethanes are prepared using polyether polyols as compounds having isocyanate-reactive groups.

5. Use according to Claim 1, **characterized in that** the alkoxysilane group-modified polyurethanes used have a viscosity at 23°C, determined in accordance with ISO/DIN 3219:1990 at a constant temperature of 23°C and a constant shear rate of 250/sec with a cone/plate rotary viscometer of type Physica MCR (Anton Paar Germany GmbH, Ostfildern, DE) using the CP 25-1 measuring cone (25 mm diameter, 1° cone angle), of less than 20 Pa▪s.

6. Use according to Claim 5, **characterized in that** the alkoxysilane group-modified polyurethanes used have a viscosity at 23°C of less than 10 Pa▪s.

7. Use according to Claim 5, **characterized in that** the alkoxysilane group-modified polyurethanes used have a viscosity at 23°C of less than 5 Pa▪s.

8. Adhesive having a having a lap shear strength of greater than 5 N/mm², the lap shear strength being determined on singly overlapped test specimens of beech with a length of 40 mm, a width of 20 mm and a thickness of 5 mm, with an overlap length of 10 mm and a bond gap thickness of about 1 mm, on a tensile testing machine with a rate of advance of 100 mm/min, following storage of the test specimens for 7 days at 23°C and 50% relative humidity, then 20 days at 40°C and lastly one day at 23°C and 50% relative humidity, comprising
5 wt% to 100 wt% of a polymer modified with alkoxysilane groups and obtainable by reaction of
a) compounds or mixtures of compounds with isocyanate-reactive groups, having a hydroxyl number and/or amine or thiol number of greater than 30 mg KOH/g,
with
b) an isocyanate-functional alkoxysilane compound of the general formula (I): 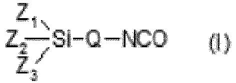 in which
Z¹, Z² and Z³ are identical or different C₁-C₈ alkoxy or C₁-C₈ alkyl moieties, which may also be bridged, but where there must be at least one C₁-C₈ alkoxy moiety on each Si atom,
Q is an at least difunctional linear or branched organic moiety, preferably an alkylene radical having 1 to 8 carbon atoms,
0 wt% to 30 wt% of a plasticizer or of a mixture of two or more plasticizers
0 wt% to 30 wt% of a solvent or of a mixture of two or more solvents
0 wt% to 5 wt% of a moisture stabilizer or of a mixture of two or more moisture stabilizers
0 wt% to 5 wt% of an ageing inhibitor or of a mixture of two or more ageing inhibitors
0 wt% to 5 wt% of a catalyst or of a mixture of two or more catalysts
0 wt% to 80 wt% of a filler or of a mixture of two or more fillers.

9. Substrates bonded using adhesives according to Claim 8.

## Revendications

1. Utilisation de polymères modifiés avec des groupes alcoxysilane, qui peuvent être obtenus par mise en réaction de
a) des composés ou des mélanges de composés contenant des groupes réactifs avec les isocyanates, qui ont un indice hydroxyle ou un indice d'amine ou de thiol supérieur à 30 mg KOH/g,
avec
b) un composé d'alcoxysilane à fonction isocyanate de formule générale (I) : 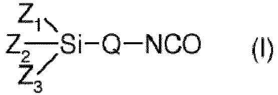 dans laquelle
Z¹, Z² et Z³ sont des radicaux alcoxy en C₁-C₈ ou alkyle en C₁-C₈ identiques ou différents, qui peuvent également être pontés, au moins un radical alcoxy en C₁-C₈ devant toutefois être présent sur chaque atome Si,
Q est un radical organique linéaire ou ramifié au moins bifonctionnel, de préférence un radical alkylène de 1 à 8 atomes de carbone,
dans des adhésifs ayant une résistance à la traction et au cisaillement supérieure à 5 N/mm², la résistance à la traction et au cisaillement étant déterminée sur des éprouvettes à chevauchement simple en hêtre ayant une longueur de 40 mm, une largeur de 20 mm et une épaisseur de 5 mm avec une longueur de chevauchement de 10 mm et une épaisseur de fente d'adhésion d'environ 1 mm sur une machine d'essais de traction à une vitesse d'avancement de 100 mm/min, après que les éprouvettes aient été entreposées pendant 7 jours à 23 °C et 50 % d'humidité relative de l'air, puis pendant 20 jours à 40 °C et enfin pendant un jour à 23 °C et 50 % d'humidité relative de l'air.

2. Utilisation selon la revendication 1, **caractérisée en ce que**, pour les composés d'alcoxysilane à fonction isocyanate de formule (I), X, Y et Z signifient indépendamment les uns des autres un groupe méthoxy ou éthoxy, et R est un radical méthylène ou propylène.

3. Utilisation selon la revendication 1, **caractérisée en ce que**, pour la fabrication des polyuréthanes modifiés par des groupes alcoxysilane, des composés polyhydroxy sont utilisés en tant que composés contenant des groupes réactifs avec les isocyanates.

4. Utilisation selon la revendication 1, **caractérisée en ce que**, pour la fabrication des polyuréthanes modifiés par des groupes alcoxysilane, des polyéther-polyols sont utilisés en tant que composés contenant des groupes réactifs avec les isocyanates.

5. Utilisation selon la revendication 1, **caractérisée en ce que** les polyuréthanes modifiés par des groupes alcoxysilane utilisés présentent à 23 °C une viscosité, déterminée selon ISO/DIN 3219:1990 à une température constante de 23 °C et un taux de cisaillement constant de 250/s avec un viscosimètre rotatif cône/plan de type Physica MCR (société Anton Paar Germany GmbH, Ostfildern, DE) en utilisant le cône de mesure CP 25-1 (25 mm de diamètre, 1° d'angle de cône), inférieure à 20 Pa·s.

6. Utilisation selon la revendication 5, **caractérisée en ce que** les polyuréthanes modifiés par des groupes alcoxysilane utilisés présentent à 23 °C une viscosité inférieure à 10 Pa·s.

7. Utilisation selon la revendication 5, **caractérisée en ce que** les polyuréthanes modifiés par des groupes alcoxysilane utilisés présentent à 23 °C une viscosité inférieure à 5 Pa·s.

8. Adhésif ayant une ayant une résistance à la traction et au cisaillement supérieure à 5 N/mm², la résistance à la traction et au cisaillement étant déterminée sur des éprouvettes à chevauchement simple en hêtre ayant une longueur de 40 mm, une largeur de 20 mm et une épaisseur de 5 mm avec une longueur de chevauchement de 10 mm et une épaisseur de fente d'adhésion d'environ 1 mm sur une machine d'essais de traction à une vitesse d'avancement de 100 mm/min, après que les éprouvettes aient été entreposées pendant 7 jours à 23 °C et 50 % d'humidité relative de l'air, puis pendant 20 jours à 40 °C et enfin pendant un jour à 23 °C et 50 % d'humidité relative de l'air, contenant :
5 % en poids à 100 % en poids d'un polymère modifié avec des groupes alcoxysilane, qui peut être obtenu par mise en réaction de
a) des composés ou des mélanges de composés contenant des groupes réactifs avec les isocyanates, qui ont un indice hydroxyle ou un indice d'amine ou de thiol supérieur à 30 mg KOH/g,
avec
b) un composé d'alcoxysilane à fonction isocyanate de formule générale (I) : 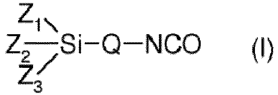 dans laquelle
Z¹, Z² et Z³ sont des radicaux alcoxy en C₁-C₈ ou alkyle en C₁-C₈ identiques ou différents, qui peuvent également être pontés, au moins un radical alcoxy en C₁-C₈ devant toutefois être présent sur chaque atome Si,
Q est un radical organique linéaire ou ramifié au moins bifonctionnel, de préférence un radical alkylène de 1 à 8 atomes de carbone,
0 % en poids à 30 % en poids d'un plastifiant ou d'un mélange de deux plastifiants ou plus,
0 % en poids à 30 % en poids d'un solvant ou d'un mélange de deux solvants ou plus,
0 % en poids à 5 % en poids d'un stabilisateur d'humidité ou d'un mélange de deux stabilisateurs d'humidité ou plus,
0 % en poids à 5 % en poids d'un agent antivieillissement ou d'un mélange de deux agents antivieillissement ou plus,
0 % en poids à 5 % en poids d'un catalyseur ou d'un mélange de deux catalyseurs ou plus,
0 % en poids à 80 % en poids d'une charge ou d'un mélange de deux charges ou plus.

9. Substrats reliés en utilisant des adhésifs selon la revendication 8.
